# EUROPEAN PATENT APPLICATION

(11) **EP 3 454 012 A1**
(43) Date of publication of application: **13.03.2019**
(21) Application number: 18185010.8
(22) Date of filing: 23.07.2018
(51) Int. Cl.: G01C 21/34, B62D 15/02, B60W 30/09, G08G 1/16

(54) **NAVIGATION SYSTEM**

(30) Priority: 18.08.2017 US 201715680770
(71) Applicant: Aptiv Technologies Limited, St. Michael (BB)
(72) Inventor: KRISHNA PRASAD, Premchand, WESTFIELD, INDIANA 46074 (US)
(74) Representative: Robert, Vincent

(57) **Abstract**

A navigation-system (10) for use on an automated vehicle (12) includes a perception-sensor (14) and a controller (28). The perception-sensor (14) detects objects (16) present proximate to a host-vehicle (12) and detects a gradient (18) of an area (20) proximate to the host-vehicle (12). The controller (28) is in communication with the perception-sensor (14). The controller (28) is configured to control the host-vehicle (12). The controller (28) determines a free-space (30) defined as off of a roadway (22) traveled by the host-vehicle (12), and drives the host-vehicle (12) through the free-space (30) when the gradient (18) of the free-space (30) is less than a slope-threshold (32) and the objects (16) can be traversed.

## Description

### TECHNICAL FIELD

This disclosure generally relates to a navigation system, and more particularly relates to a navigation system that determines a safe pull-over-area.

### BACKGROUND

It is known to use a map to identify a safe pull-over area for an autonomous vehicle traveling on a roadway. Large distances may separate these safe pull-over areas, or the map may not contain the latest updates for road construction, which may not accommodate the autonomous vehicle in an emergency situation.

### SUMMARY

In accordance with one embodiment, a navigation-system for use on an automated vehicle is provided. The navigation-system includes a perception-sensor and a controller. The perception-sensor detects objects present proximate to a host-vehicle and detects a gradient of an area proximate to the host-vehicle. The controller is in communication with the perception-sensor. The controller is configured to control the host-vehicle. The controller determines a free-space defined as off of a roadway traveled by the host-vehicle, and drives the host-vehicle through the free-space when the gradient of the free-space is less than a slope-threshold and the objects can be traversed.

The controller may distinguish between the objects that are a barrier and the objects that are grass based on the perception-sensor. The controller may further determine a height of the grass. The slope-threshold may be determined based on a dynamic-model of the host-vehicle. The controller may further determine a path to drive the host-vehicle from the roadway through the free-space and return to the roadway. The system may further include an alert-device in communication with the controller, wherein the alert-device notifies an operator of the host-vehicle of the free-space. The system may further include a vehicle-to-vehicle transceiver in communication with the controller, wherein the vehicle-to-vehicle transceiver notifies an other-vehicle that the host-vehicle is driving to the free-space.

In another embodiment, a method of operating a navigation-system is provided. The method includes the steps of detecting objects, determining a free-space, and driving a host-vehicle. The step of detecting objects may include detecting, with a perception-sensor, objects present proximate to a host-vehicle and detecting a gradient of an area proximate to the host-vehicle. The step of determining the free-space may include determining, with a controller in communication with the perception-sensor, the controller configured to control the host-vehicle, the free-space defined as off of a roadway traveled by the host-vehicle. The step of driving the host-vehicle may include driving the host-vehicle, with the controller, through the free-space when the gradient of the free-space is less than a slope-threshold and the objects can be traversed.

The controller may distinguish between the objects that are a barrier and the objects that are grass based on the perception-sensor. The controller may further determine a height of the grass. The slope-threshold may be determined based on a dynamic-model of the host-vehicle. The controller may further determine a path to drive the host-vehicle from the roadway through the free-space and return to the roadway. The system may further include an alert-device in communication with the controller, wherein the alert-device notifies an operator of the host-vehicle of the free-space. The system may further include a vehicle-to-vehicle transceiver in communication with the controller, wherein the vehicle-to-vehicle transceiver notifies an other-vehicle that the host-vehicle is driving to the free-space.

In yet another embodiment, an automated vehicular navigation-system is provided. The system includes a perception-sensor and a controller. The perception-sensor that detects objects and an off-road-gradient. The controller is in communication with the perception-sensor. The controller determines an off-road-path based on the perception-sensor and drives a host-vehicle through the off-road-path when objects and the off-road-gradient can be traversed.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an illustration of a navigation system in accordance with one embodiment;
Fig. 2 is an illustration of a host-vehicle equipped with the navigation system of Fig. 1 traveling on a roadway in accordance with one embodiment;
Fig. 3 is a top-view of the roadway of Fig. 2 in accordance with one embodiment;
Fig. 4 is a flow-chart of a method of operating the navigation system of Fig. 1 in accordance with another embodiment;
Fig. 5 is an illustration of a navigation system in accordance with yet another embodiment;
Fig. 6 is an illustration of a host-vehicle equipped with the navigation system of Fig. 5 traveling on a roadway in accordance with yet another embodiment; and
Fig. 7 is a top-view of the roadway of Fig. 6 in accordance with yet another embodiment.

### DETAILED DESCRIPTION

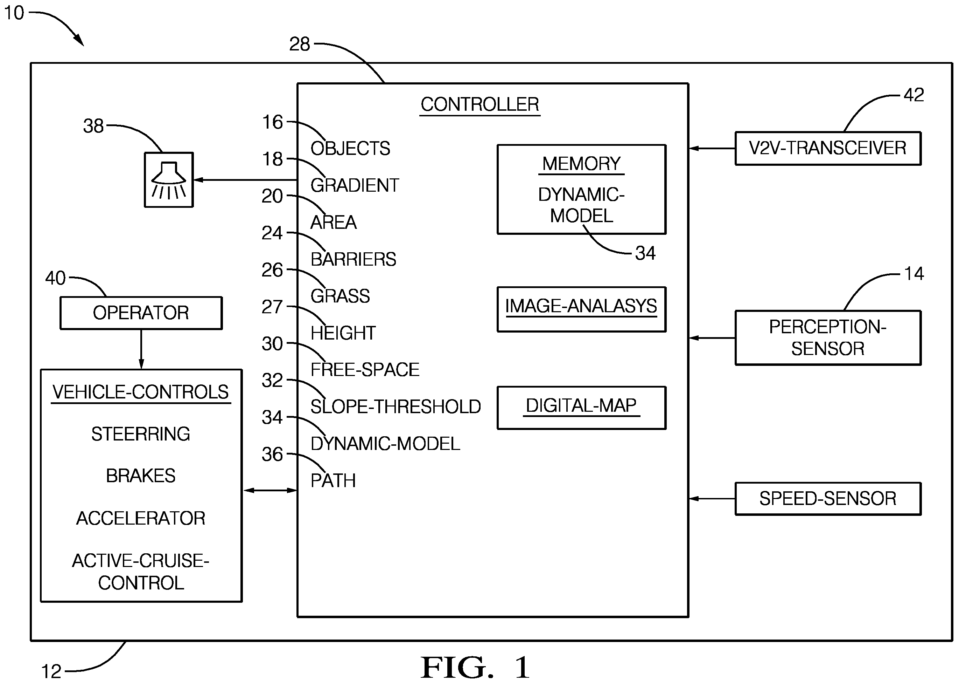

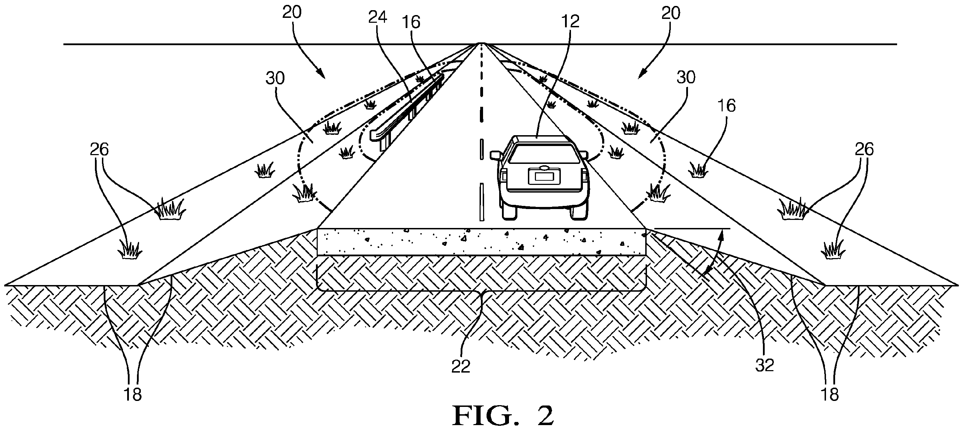

Fig. 1 illustrates a non-limiting example of a navigation system 10, hereafter referred to as the system 10, for use on an automated vehicle 12, hereafter referred to as a host-vehicle 12. The system 10 includes a perception-sensor 14 that detects objects 16 present proximate to the host-vehicle 12 and detects a gradient 18 of an area 20 (see Fig. 2) proximate to the host-vehicle 12. As will be described in more detail below, the system 10 is an improvement over prior navigation systems because the system 10 is configured to determine a safe pull-over-area. As used herein, the term 'automated vehicle' is not meant to suggest that fully automated or autonomous operation of the host-vehicle 12 is required. It is contemplated that the teachings presented herein are applicable to instances where the host-vehicle 12 is entirely manually operated by a human and the automation is merely providing emergency vehicle controls to the human.

The perception-sensor 14 may include a camera, a two dimensional radar, a three dimensional radar, a lidar, or any combination thereof. As used herein, the gradient 18 is a slope or an angle-of-inclination of the area 20 proximate to the host-vehicle 12. The area 20 may include a shoulder of a roadway 22 and/or a median of the roadway 22 that may be paved or un-paved. The objects 16 may include barriers 24, such as guard rails, construction barrels, trees, bushes, large rocks, etc., that may prevent the host-vehicle 12 from traversing the area 20. The objects 16 may also include grass 26 growing in the area 20 which may vary in a height 27 above a surface that determines the gradient 18.

The system 10 also includes a controller 28 in communication with the perception-sensor 14. The controller 28 is configured to control the host-vehicle 12, that may include vehicle-controls such as steering, brakes, and an accelerator. The controller 28 may include a processor (not shown) such as a microprocessor or other control circuitry such as analog and/or digital control circuitry including an application specific integrated circuit (ASIC) for processing data as should be evident to those in the art. The controller 28 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected instance of the object 16 and gradient 18 exists based on signals received by the controller 28 from the perception-sensor 14, as described herein.

Fig. 2 illustrates a perspective-view of the roadway 22, and a cross-section of a road-bed that illustrates the gradient 18. The controller 28 determines a free-space 30 defined as off of the roadway 22 traveled by the host-vehicle 12. As used herein, the free-space 30 is characterized as a subsection of the area 20 and may be traversed (i.e. driven over) by the host-vehicle 12 without encountering any barriers 24. The free-space 30 may also include grass 26 of varying heights 27 that would not act as barriers 24 to the host-vehicle 12. That is, the host-vehicle 12 may traverse the grass 26 (or other small objects 16) without harm to the host-vehicle 12. The controller 28 may further determine the height 27 of the grass 26 based on the perception-sensor 14 using any of the known methods of determining elevation of the objects 16, and will be recognized by those in the art.

The controller 28 may also distinguish between the objects 16 that are barriers 24 and the objects 16 that are grass 26 based on the perception-sensor 14, as will be described in more detail below.

The controller 28 may analyze a signal from the perception-sensor 14 to categorize the data from each detected target (i.e. objects 16) with respect to a list of previously detected targets having established tracks. As used herein, a track refers to one or more data sets that have been associated with a particular one of the detected targets. By way of example and not limitation, if the amplitude of the signal is above a predetermined amplitude threshold, then the controller 28 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view (not shown) of the perception-sensor 14.

The controller 28 may determine a region-of-interest (not shown) within the field-of-view. As illustrated in Fig. 2, the region-of-interest may represent the area 20 directly ahead of the host-vehicle 12 that extends from a left-corner and from a right-corner of the host-vehicle 12. The objects 16 in the region-of-interest and the host-vehicle 12 will collide if the host-vehicle 12 continues to move in the direction of the objects 16. The field-of-view also has a known vertical-angle (not shown) and a known horizontal-angle (not specifically shown) that are design features of the perception-sensor 14 and determine how close to the host-vehicle 12 the objects 16 may be detected.

The controller 28 may define an occupancy-grid (not shown) that segregates the field-of-view into an array of grid-cells. As mentioned previously, the controller 28 may assign the identification number to the detected target in the grid-location that is associated with unique grid-cells. A dimension of the individual grid-cell may be of any size and is advantageously not greater than five centimeters (5cm) on each side.

The controller 28 periodically updates the detections within the grid-cells and determines a repeatability-of-detection of each of the grid-cells based on the reflections detected by the perception-sensor 14. The repeatability-of-detection corresponds to a history of detections within the grid-cells, where a larger number of detections (i.e. more persistent detections) increases the certainty that the target resides in the occupancy-grid.

The controller 28 may determine that the barrier 24 (i.e. the guard rail, the tree, a lamp post, etc.) is present in the field-of-view when each of a string of the grid-cells are characterized by the repeatability-of-detection greater than a repeatability-threshold. Experimentation by the inventors has discovered that the repeatability-threshold of two detections in a grid-cell may be indicative of the presence of the barrier 24.

The controller 28 drives the host-vehicle 12 through the free-space 30 when the grid-cells are characterized by the repeatability-of-detection less than the repeatability-threshold, which may be indicative of grass 26 or other objects 16 that may be traversed and that may typically present random and/or less persistent reflections, and when the gradient 18 of the free-space 30 is less than a slope-threshold 32.

The slope-threshold 32 may be user defined and may be based on parameters that may affect a roll-over of the host-vehicle 12, such as a wheel-base, a track-width, a center-of-gravity, a gross-vehicle-weight, etc., as will be understood by those in the art. The slope-threshold 32 may also be determined or varied based on an angle-of-attack of the host-vehicle 12. For example, the slope-threshold 32 may be greater when the angle-of-attack is closer to being straight down the gradient 18, i.e. at a right angle to the travel direction of the host-vehicle 12 in Fig. 2 than would be the case for the angle-of-attack being relatively shallow, i.e. parallel to the travel direction of the host-vehicle 12 in Fig. 2. The slope-threshold 32 may also be determined based on a dynamic-model 34 of the host-vehicle 12 stored in the memory of the controller 28 that may anticipate a reaction of the host-vehicle 12 to the gradient 18. The dynamic-model 34 may estimate a dynamic-response of the host-vehicle 12 to various inputs, including, but not limited to, a suspension-input, a steering-input, a velocity-input, a wheel-speed input, and a cargo-load-input. The dynamic-model 34 may also include components such as aerodynamic, geometric, mass, motion, tire, and off-roadway specific components that may describe the motion of the host-vehicle 12 under a variety of conditions, and will be understood by one skilled in the art.

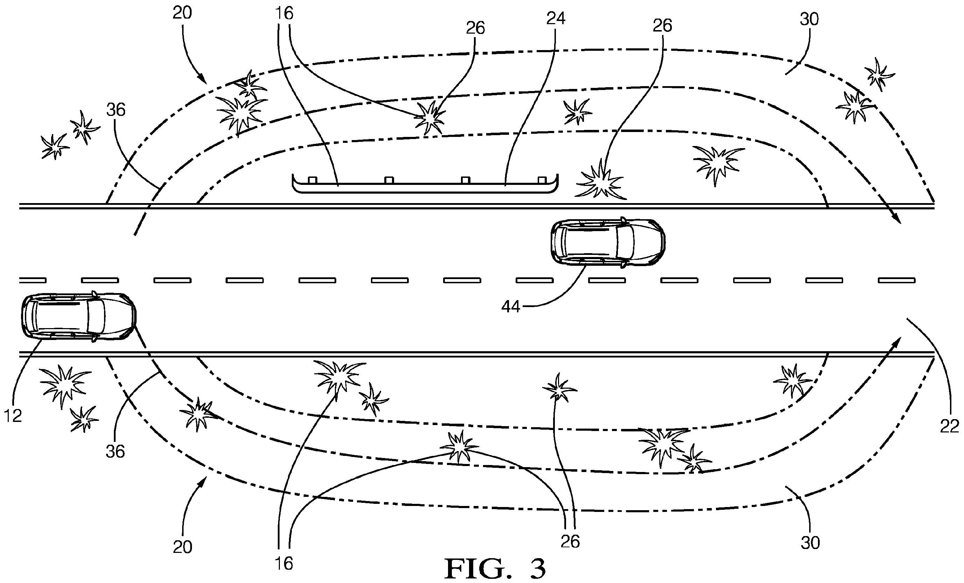

Fig. 3 is a top-view of the roadway 22 illustrated in Fig. 2 and illustrates the free-space 30 on both sides of the roadway 22. The controller 28 may further determine a path 36 to drive the host-vehicle 12 from the roadway 22 through the free-space 30 and return to the roadway 22. The host-vehicle 12 may stop in the free-space 30, or may continue moving through the free-space 30 along the path 36 and return to the roadway 22, as may be done when avoiding an obstacle in the roadway 22.

Returning to Fig. 1, the system 10 may further include an alert-device 38 in communication with the controller 28. The alert-device 38 notifies an operator 40 of the host-vehicle 12 of the free-space 30 to ensure the operator 40 is not surprised by the driving maneuver, in addition to providing the operator 40 an opportunity to override the controller 28. The system 10 may also include a vehicle-to-vehicle transceiver 42 (V2V-transceiver 42) in communication with the controller 28 that notifies an other-vehicle 44 that the host-vehicle 12 is driving to the free-space 30. The V2V-transceiver 42 may be a dedicated short range communication (DSRC) device that operates in a 5.9 GHz band with a bandwidth of 75 MHz and a typical range of 1000 meters. One skilled in the art will recognize that other ad hoc V2V networks may exist, and are included herein.

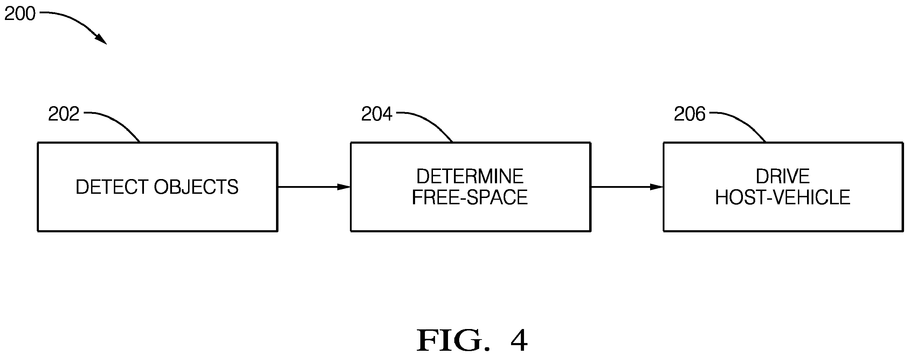

Fig. 4 illustrates a non-limiting example of another embodiment of a method 200 of operating a navigation-system 10, hereafter referred to as the system 10, for use on an automated vehicle 12, hereafter referred to as a host-vehicle 12. Fig. 1 illustrates a non-limiting example of the system 10.

Step 202, DETECT OBJECTS, may include detecting, with a perception-sensor 14, objects 16 present proximate to the host-vehicle 12 and detecting a gradient 18 of an area 20 (see Fig. 2) proximate to the host-vehicle 12. The perception-sensor 14 may include a camera, a two dimensional radar, a three dimensional radar, a lidar, or any combination thereof. As used herein, the gradient 18 is a slope or an angle-of-inclination of the area 20 proximate to the host-vehicle 12. The area 20 may include a shoulder of a roadway 22 and/or a median of the roadway 22 that may be paved or un-paved. The objects 16 may include barriers 24, such as guard rails, construction barrels, trees, bushes, large rocks, etc., that prevent the host-vehicle 12 from traversing the area 20. The objects 16 may also include grass 26 growing in the area 20 which may vary in a height 27 above a surface that determines the gradient 18.

Step 204, DETERMINE FREE-SPACE, may include determining, with a controller 28 in communication with the perception-sensor 14, a free-space 30 defined as off of a roadway 22 traveled by the host-vehicle 12. The controller 28 is configured to control the host-vehicle 12, that may include vehicle-controls such as steering, brakes, and an accelerator. The controller 28 may include a processor (not shown) such as a microprocessor or other control circuitry such as analog and/or digital control circuitry including an application specific integrated circuit (ASIC) for processing data as should be evident to those in the art. The controller 28 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected instance of the object 16 and gradient 18 exists based on signals received by the controller 28 from the perception-sensor 14, as described herein.

Fig. 2 illustrates a perspective-view of the roadway 22, and a cross-section of a road-bed that illustrates the gradient 18. As used herein, the free-space 30 is characterized as a subsection of the area 20 and may be traversed (i.e. driven over) by the host-vehicle 12 without encountering any barriers 24. The free-space 30 may also include grass 26 of varying heights 27 that would not act as a barrier 24 to the host-vehicle 12. That is, the host-vehicle 12 may traverse the grass 26 (or other small objects 16) without harm to the host-vehicle 12. The controller 28 may further determine the height 27 of the grass 26 based on the perception-sensor 14 using any of the known methods of determining elevation of the objects 16.

The controller 28 may distinguish between the objects 16 that are barriers 24 and the objects 16 that are grass 26 based on the perception-sensor 14, as will be described in more detail below.

The controller 28 may analyze a signal from the perception-sensor 14 to categorize the data from each detected target (i.e. objects 16) with respect to a list of previously detected targets having established tracks. As used herein, a track refers to one or more data sets that have been associated with a particular one of the detected targets. By way of example and not limitation, if the amplitude of the signal is above a predetermined amplitude threshold, then the controller 28 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view (not shown) of the perception-sensor 14.

The controller 28 may determine a region-of-interest (not shown) within the field-of-view. As illustrated in Fig. 2, the region-of-interest may represent the area 20 directly ahead of the host-vehicle 12 that extends from a left-corner and from a right-corner of the host-vehicle 12. The objects 16 in the region-of-interest and the host-vehicle 12 will collide if the host-vehicle 12 continues to move in the direction of the objects 16. The field-of-view also has a known vertical-angle (not shown) and a known horizontal-angle (not specifically shown) that are design features of the perception-sensor 14 and determine how close to the host-vehicle 12 the objects 16 may be detected.

The controller 28 may define an occupancy-grid (not shown) that segregates the field-of-view into an array of grid-cells. As mentioned previously, the controller 28 may assign the identification number to the detected target in the grid-location that is associated with unique grid-cells. A dimension of the individual grid-cell may be of any size and is advantageously not greater than five centimeters (5cm) on each side.

The controller 28 periodically updates the detections within the grid-cells and determines a repeatability-of-detection of each of the grid-cells based on the reflections detected by the perception-sensor 14. The repeatability-of-detection corresponds to a history of detections within the grid-cells, where a larger number of detections (i.e. more persistent detections) increases the certainty that the target resides in the occupancy-grid.

The controller 28 may determine that the barrier 24 (i.e. the guard rail, the tree, a lamp post, etc.) is present in the field-of-view when each of a string of the grid-cells are characterized by the repeatability-of-detection greater than a repeatability-threshold. Experimentation by the inventors has discovered that the repeatability-threshold of two detections in a grid-cell may be indicative of the presence of the barrier 24.

Step 206, DRIVE HOST-VEHICLE, may include driving, with the controller 28, the host-vehicle 12 through the free-space 30 when the gradient 18 of the free-space 30 is less than a slope-threshold 32 and the objects 16 can be traversed. The controller 28 drives the host-vehicle 12 through the free-space 30 when the grid-cells are characterized by the repeatability-of-detection less than the repeatability-threshold, which may be indicative of grass 26 or other objects 16 that may be traversed and that may typically present random and/or less persistent reflections, and when the gradient 18 of the free-space 30 is less than a slope-threshold 32.

The slope-threshold 32 may be user defined and may be based on parameters that affect a roll-over of the host-vehicle 12, such as a wheel-base, a track-width, a center-of-gravity, a gross-vehicle-weight, etc., as will be understood by those in the art. The slope-threshold 32 may also be determined or varied based on an angle-of-attack of the host-vehicle 12. For example, the slope-threshold 32 may be greater when the angle-of-attack is closer to being straight down the gradient 18, i.e. at a right angle to the travel direction of the host-vehicle 12 in Fig. 2 than would be the case for the angle-of-attack being relatively shallow, i.e. parallel to the travel direction of the host-vehicle 12 in Fig. 2. The slope-threshold 32 may also be determined based on a dynamic-model 34 of the host-vehicle 12 stored in the memory of the controller 28 that may anticipate a reaction of the host-vehicle 12 to the gradient 18. The dynamic-model 34 may estimate a dynamic-response of the host-vehicle 12 to various inputs, including, but not limited to, a suspension-input, a steering-input, a velocity-input, a wheel-speed input, and a cargo-load-input. The dynamic-model 34 may also include components such as aerodynamic, geometric, mass, motion, tire, and off-roadway specific components that may describe the motion of the host-vehicle 12 under a variety of conditions, and will be understood by one skilled in the art.

Fig. 3 is a top-view of the roadway 22 illustrated in Fig. 2 and illustrates the free-space 30 on both sides of the roadway 22. The controller 28 may further determine a path 36 to drive the host-vehicle 12 from the roadway 22 through the free-space 30 and return to the roadway 22. The host-vehicle 12 may stop in the free-space 30, or may continue moving through the free-space 30 along the path 36 and return to the roadway 22, as may be done when avoiding an obstacle in the roadway 22.

Returning to Fig. 1, the system 10 may further include an alert-device 38 in communication with the controller 28. The alert-device 38 notifies an operator 40 of the host-vehicle 12 of the free-space 30 to ensure the operator 40 is not surprised by the driving maneuver, in addition to providing the operator 40 an opportunity to override the controller 28. The system 10 may also include a vehicle-to-vehicle transceiver 42 (V2V-transceiver 42) in communication with the controller 28 that notifies an other-vehicle 44 that the host-vehicle 12 is driving to the free-space 30. The V2V-transceiver 42 may be a dedicated short range communication (DSRC) device that operates in a 5.9 GHz band with a bandwidth of 75 MHz and a typical range of 1000 meters. One skilled in the art will recognize that other ad hoc V2V networks may exist, and are included herein.

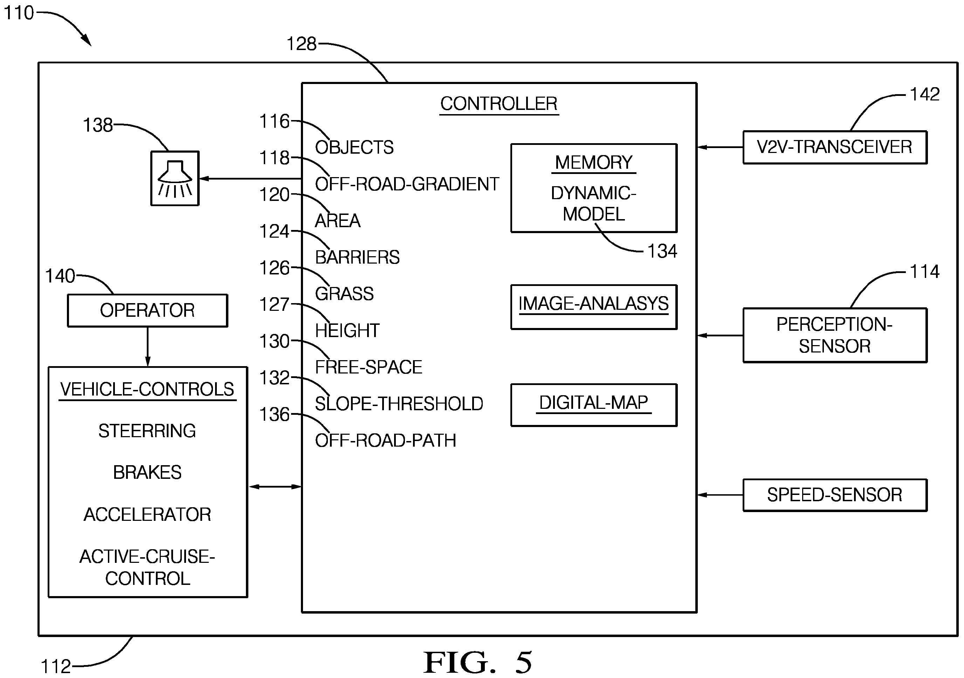

Fig. 5 illustrates a non-limiting example of yet another embodiment of an automated vehicular navigation-system 110, hereafter referred to as the system 110, for use on an automated vehicle 112, hereafter referred to as a host-vehicle 112.

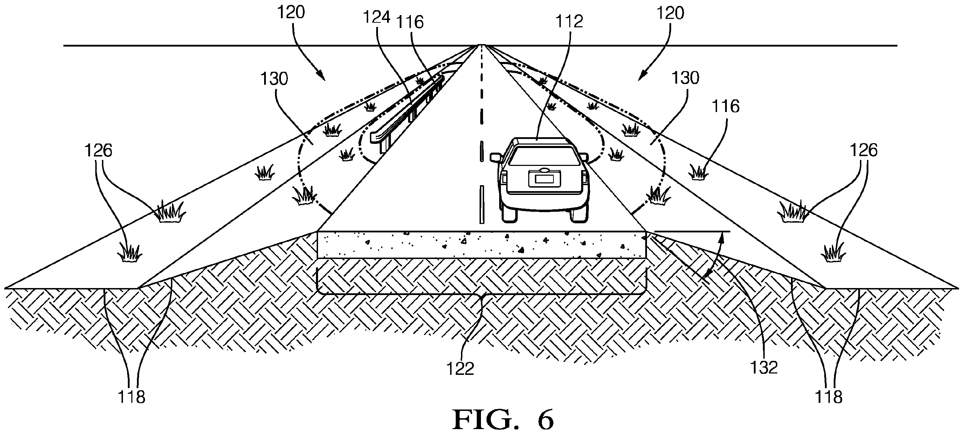

The system 110 includes a perception-sensor 114 that detects objects 116 present proximate to the host-vehicle 112 and detects an off-road-gradient 118 of an area 120 (see Fig. 6) proximate to the host-vehicle 112. The perception-sensor 114 may include a camera, a two dimensional radar, a three dimensional radar, a lidar, or any combination thereof. As used herein, the off-road-gradient 118 is a slope or angle-of-inclination of the area 120 proximate to the host-vehicle 112. The area 120 may include a shoulder of a roadway 122 and/or a median of the roadway 122 that may be paved or un-paved. The objects 116 may include barriers 124, such as guard rails, construction barrels, trees, bushes, large rocks, etc., that may prevent the host-vehicle 112 from traversing the area 120. The objects 116 may also include grass 126 growing in the area 120 which may vary in a height 127 above a surface that determines the off-road-gradient 118.

The system 110 also includes a controller 128 in communication with the perception-sensor 114. The controller 28 is configured to control the host-vehicle 112, that may include vehicle-controls such as steering, brakes, and an accelerator. The controller 128 may include a processor (not shown) such as a microprocessor or other control circuitry such as analog and/or digital control circuitry including an application specific integrated circuit (ASIC) for processing data as should be evident to those in the art. The controller 128 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected instance of the object 116 and off-road-gradient 118 exists based on signals received by the controller 128 from the perception-sensor 114, as described herein.

Fig. 6 illustrates a perspective-view of the roadway 122, and a cross-section of a road-bed that illustrates the off-road-gradient 118. The controller 128 determines a free-space 130 defined as off of the roadway 122 traveled by the host-vehicle 112. As used herein, the free-space 130 is characterized as a subsection of the area 120 and may be traversed (i.e. driven over) by the host-vehicle 112 without encountering any barriers 124. The free-space 130 may also include grass 126 of varying heights 127 that would not act as barriers 124 to the host-vehicle 112. That is, the host-vehicle 112 may traverse the grass 126 (or other small objects 116) without harm to the host-vehicle 112. The controller 128 may further determine the height 127 of the grass 126 based on the perception-sensor 114 using any of the known methods of determining elevation of the objects 116.

The controller 128 may distinguish between the objects 116 that are barriers 124 and the objects 116 that are grass 126 based on the perception-sensor 114, as will be described in more detail below.

The controller 128 may analyze a signal from the perception-sensor 114 to categorize the data from each detected target (i.e. objects 116) with respect to a list of previously detected targets having established tracks. As used herein, a track refers to one or more data sets that have been associated with a particular one of the detected targets. By way of example and not limitation, if the amplitude of the signal is above a predetermined amplitude threshold, then the controller 128 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view (not shown) of the perception-sensor 114.

The controller 128 may determine a region-of-interest (not shown) within the field-of-view. As illustrated in Fig. 6, the region-of-interest may represent the area 120 directly ahead of the host-vehicle 112 that extends from a left-corner and from a right-corner of the host-vehicle 112. The objects 116 in the region-of-interest and the host-vehicle 112 will collide if the host-vehicle 112 continues to move in the direction of the objects 116. The field-of-view also has a known vertical-angle (not shown) and a known horizontal-angle (not specifically shown) that are design features of the perception-sensor 114 and determine how close to the host-vehicle 112 the objects 116 may be detected.

The controller 128 may define an occupancy-grid (not shown) that segregates the field-of-view into an array of grid-cells. As mentioned previously, the controller 128 may assign the identification number to the detected target in the grid-location that is associated with unique grid-cells. A dimension of the individual grid-cell may be of any size and is advantageously not greater than five centimeters (5cm) on each side.

The controller 128 periodically updates the detections within the grid-cells and determines a repeatability-of-detection of each of the grid-cells based on the reflections detected by the perception-sensor 114. The repeatability-of-detection corresponds to a history of detections within the grid-cells, where a larger number of detections (i.e. more persistent detections) increases the certainty that the target resides in the occupancy-grid.

The controller 128 may determine that the barrier 124 (i.e. the guard rail, the tree, a lamp post, etc.) is present in the field-of-view when each of a string of the grid-cells are characterized by the repeatability-of-detection greater than a repeatability-threshold. Experimentation by the inventors has discovered that the repeatability-threshold of two detections in a grid-cell may be indicative of the presence of the barrier 124.

The controller 128 drives the host-vehicle 112 through the free-space 130 when the grid-cells are characterized by the repeatability-of-detection less than the repeatability-threshold, which may be indicative of grass 126 or other objects 116 that may be traversed and that may typically present random and/or less persistent reflections, and when the off-road-gradient 118 of the free-space 130 is less than a slope-threshold 132.

The slope-threshold 132 may be user defined and may be based on parameters that affect a roll-over of the host-vehicle 112, such as a wheel-base, a track-width, a center-of-gravity, a gross-vehicle-weight, etc., as will be understood by those in the art. The slope-threshold 132 may also be determined or varied based on an angle-of-attack of the host-vehicle 112. For example, the slope-threshold 132 may be greater when the angle-of-attack is closer to being straight down the off-road-gradient 118, i.e. at a right angle to the travel direction of the host-vehicle 112 in Fig. 6 than would be the case for the angle-of-attack being relatively shallow, i.e. parallel to the travel direction of the host-vehicle 112 in Fig. 6. The slope-threshold 132 may also be determined based on a dynamic-model 134 of the host-vehicle 112 stored in the memory of the controller 128 that may anticipate a reaction of the host-vehicle 112 to the off-road-gradient 118. The dynamic-model 134 may estimate a dynamic-response of the host-vehicle 112 to various inputs, including, but not limited to, a suspension-input, a steering-input, a velocity-input, a wheel-speed input, and a cargo-load-input. The dynamic-model 134 may also include components such as aerodynamic, geometric, mass, motion, tire, and off-roadway specific components that may describe the motion of the host-vehicle 112 under a variety of conditions, and will be understood by one skilled in the art.

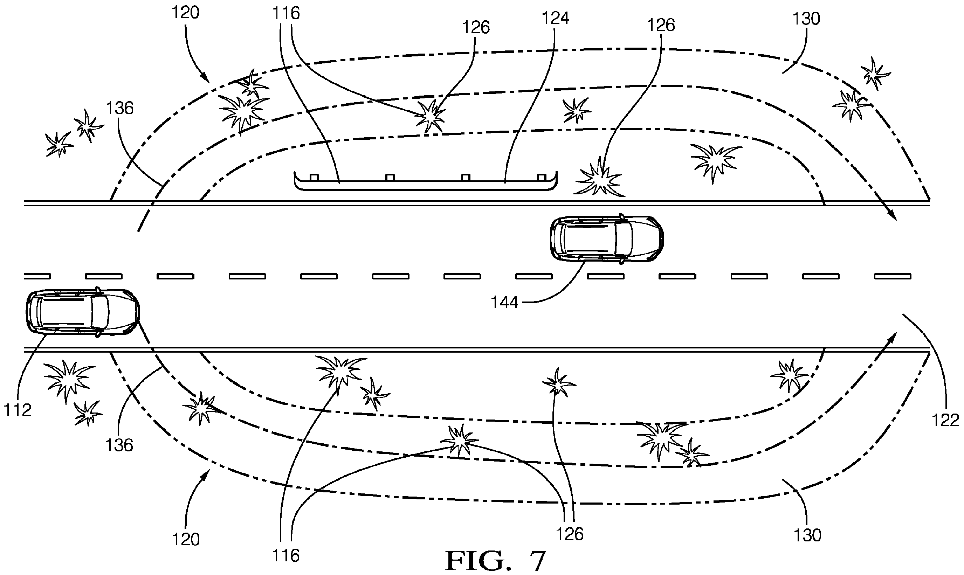

Fig. 7 is a top-view of the roadway 122 illustrated in Fig. 6 and illustrates the free-space 130 on both sides of the roadway 122. The controller 128 determines an off-road-path 136 to drive the host-vehicle 112 from the roadway 122 through the free-space 130 and return to the roadway 122. The host-vehicle 112 may stop in the free-space 130, or may continue moving through the free-space 130 along the off-road-path 136 and return to the roadway 122, as may be done to avoid an obstacle in the roadway 122.

Returning to Fig. 5, the system 110 may further include an alert-device 138 in communication with the controller 128. The alert-device 138 notifies an operator 140 of the host-vehicle 112 of the free-space 130 to ensure the operator 140 is not surprised by the driving maneuver, in addition to providing the operator 140 an opportunity to override the controller 128. The system 110 may also include a vehicle-to-vehicle transceiver 142 (V2V-transceiver 142) in communication with the controller 128 that notifies an other-vehicle 144 that the host-vehicle 112 is driving through the free-space 130. The V2V-transceiver 142 may be a dedicated short range communication (DSRC) device that operates in a 5.9 GHz band with a bandwidth of 75 MHz and a typical range of 1000 meters. One skilled in the art will recognize that other ad hoc V2V networks may exist, and are included herein.

Accordingly, a navigation system 10 (the system 10), a controller 28 for the system 10, and a method 200 of operating the system 10 are provided. The system 10 is beneficial because the system 10 determines the free-space 30 off of the roadway 22, indicative of a safe pull-over-area, and drives the host-vehicle 12 through the free-space 30.

While this invention has been described in terms of the preferred embodiments thereof, it is not intended to be so limited, but rather only to the extent set forth in the claims that follow.

## Claims

1. A navigation-system (10) for use on an automated vehicle, said system (10) comprising:
a perception-sensor (14) that detects objects (16) present proximate to a host-vehicle (12) and detects a gradient (18) of an area (20) proximate to the host-vehicle (12); and
a controller (28) in communication with the perception-sensor (14), said controller (28) configured to control the host-vehicle (12), wherein the controller (28) determines a free-space (30) defined as off of a roadway (22) traveled by the host-vehicle (12), and drives the host-vehicle (12) through the free-space (30) when the gradient (18) of the free-space (30) is less than a slope-threshold (32) and the objects (16) can be traversed.

2. The system (10) in accordance with claim 1, wherein the controller (28) distinguishes between the objects (16) that are a barrier (24) and the objects (16) that are grass (26) based on the perception-sensor (14).

3. The system (10) in accordance with claim 2, wherein the controller (28) further determines a height (27) of the grass (26).

4. The system (10) according to any one of the preceding claims, wherein the slope-threshold (32) is determined based on a dynamic-model (34) of the host-vehicle (12).

5. The system (10) according to any one of the preceding claims, wherein the controller (28) further determines a path (36) to drive the host-vehicle (12) from the roadway (22) through the free-space (30) and return to the roadway (22).

6. The system (10) according to any one of the preceding claims, wherein the system (10) further includes an alert-device (38) in communication with the controller (28), wherein the alert-device (38) notifies an operator (40) of the host-vehicle (12) of the free-space (30).

7. The system (10) according to any one of the preceding claims, wherein the system (10) further includes a vehicle-to-vehicle transceiver (42) in communication with the controller (28), wherein the vehicle-to-vehicle transceiver (42) notifies an other-vehicle (44) that the host-vehicle (12) is driving to the free-space (30).

8. A method (200) of operating a navigation-system (10), comprising:
detecting, with a perception-sensor (14), objects (16) present proximate to a host-vehicle (12) and detecting a gradient (18) of an area (20) proximate to the host-vehicle (12);
determining, with a controller (28) in communication with the perception-sensor (14), said controller (28) configured to control the host-vehicle (12), a free-space (30) defined as off of a roadway (22) traveled by the host-vehicle (12); and
driving, with the controller (28), the host-vehicle (12) through the free-space (30) when the gradient (18) of the free-space (30) is less than a slope-threshold (32) and the objects (16) can be traversed.

9. The method (200) in accordance with claim 8, wherein the controller (28) distinguishes between the objects (16) that are a barrier (24) and the objects (16) that are grass (26) based on the perception-sensor (14).

10. The method (200) in accordance with claim 9, wherein the controller (28) further determines a height (27) of the grass (26).

11. The method (200) according to any one of the claims 8 to 10, wherein the slope-threshold (32) is determined based on a dynamic-model (34) of the host-vehicle (12).

12. The method (200) according to any one of the claims 8 to 11, wherein the controller (28) further determines a path (36) to drive the host-vehicle (12) from the roadway (22) through the free-space (30) and return to the roadway (22).

13. The method (200) according to any one of the claims 8 to 12, wherein the system (10) further includes an alert-device (38) in communication with the controller (28), wherein the alert-device (38) notifies an operator (40) of the host-vehicle (12) of the free-space (30).

14. The method (200) according to any one of the claims 8 to 13, wherein the system (10) further includes a vehicle-to-vehicle transceiver (42) in communication with the controller (28), wherein the vehicle-to-vehicle transceiver (42) notifies an other-vehicle (44) that the host-vehicle (12) is driving to the free-space (30).

15. An automated vehicular navigation-system (110), comprising:
a perception-sensor (114) that detects objects (116) and an off-road-gradient (118); and
a controller (128) in communication with the perception-sensor (114), said controller (128) determines an off-road-path (136) based on the perception-sensor (114) and drives a host-vehicle (112) along the off-road-path (136) when objects (116) and the off-road-gradient (118) can be traversed.
